Europäisches Patentamt

European Patent Office

Office européen des brevets

(11) Publication number: **0 213 806**
**A2**

# EUROPEAN PATENT APPLICATION

(21) Application number: **86306100.8**

(22) Date of filing: **07.08.86**

(51) Int. Cl.⁴: **E21B 47/10** , G01P 5/04 , G01F 1/20 , G01F 1/34

(30) Priority: **03.09.85 GB 8521887**

(43) Date of publication of application:
**11.03.87 Bulletin 87/11**

(84) Designated Contracting States:
**DE FR IT NL**

(71) Applicant: **PRAD Research and Development N.V.**
**De Ruyterkade 62**
**Willemsstad Curacao Netherlands Antilles(NL)**

(72) Inventor: **White, David**
**52 Glebe Road**
**Cambridge CB14SZ(GB)**
Inventor: **Bradbury, Leslie**
**"Tylecroft" Stoke Road**
**Noss Mayo, Devon(GB)**

(74) Representative: **Dupont, Henri**
**C/o Schlumberger Cambridge Research Limited High Cross Madingley Road**
**Cambridge CB3 0HG(GB)**

(54) **Perforation flow identification tool.**

(57) A tool (10, 11) to be lowered down a borehole has a collar (13) with vanes (14) for sensing the transverse and torsional forces created by inflow at a perforation. The forces distort a bar (15) to which the collar (13) is attached by a spider (16) and strain gauges (18) provide corresponding signals. The total force on the collar provides an indication of the flow velocity through a perforation relative to the flow velocity up the wellbore at that perforation. Other embodiments utilise rings of temperature or capacitance transducers around the tool to sense field distributions from which information as to flow velocity and species can be inferred.

FIG. 1

## MONITORING PERFORATION FLOW IN A BOREHOLE

The present invention relates to methods and apparatus for monitoring perforation flow in a borehole. After a borehole has been cased it is customary to utilise a perforation gun to fire a pattern of perforations through the casing at appropriate levels in order to allow the oil or gas deposits which are being won to flow into the borehole. It is desirable to be able to measure the flow in through individual perforations. Such information is valuable in deciding upon further action to improve the yield of a well. As one example, it may be found that perforations which should be contributing freely are failing to do so, indicating that remedial action may be desirable at the level of these perforations by way of fracturing or acidizing the formation.

The flow into a borehole through a perforation will commence in a generally transverse direction but the inflowing jet will merge into the flow up the borehole, referred to as the wellbore flow. The ratio between perforation flow velocity and wellbore flow velocity can vary very widely and it is obvious that the wellbore flow velocity increases relative to perforation flow velocity the higher up the borehole one proceeds.

Attempts have already been made to measure perforation flow by using a tool incorporating a spinner, i.e. a mechanical flowmeter. In practice, the rate of revolution of a spinner does not correlate at all well with perforation flow velocity. In the first place, it is difficult to take account of the ratio of perforation flow velocity to wellbore flow velocity. In the second place, the rate of rotation of a spinner is highly susceptible to the precise direction of perforation flow. In theory this is radially in towards the centre of the borehole. In practice the direction may be skewed quite appreciably relative to a radius.

The primary object of the present invention is to provide a method and apparatus which are capable of yielding more accurately informative results.

There are other considerations of interest in relation to perforation flow. The flow is not necessarily single phase and the flow in from a given perforation may consist largely or even wholly of water or may consist largely or wholly of gas when the borehole is intended to win oil. Naturally, the composition of the flow is readily ascertained at the top of the borehole. It would be extremely valuable to have an indication of the flow species at individual perforations. This knowledge would provide the basis for possible remedial work, e.g. to stop off the flow of undesired water into the borehole. It is therefore a further object of the present invention to provide a method and apparatus capable of providing such information.

The invention itself is defined in the appended claims but, briefly, the basis of the invention is use of a plurality of static transducers to provide information relative to the flow into the wellbore. By using a plurality of transducers, sufficient information can be obtained to interpret results correctly in the presence of varying flow velocity ratios and varying directions of perforation flow. This is in contrast to the known use of a spinner type flow meter which is capable of providing only a single reading.

In a particularly important application of the invention the transducers are force transducers which provide information relating to pressure forces on a tool at least in two transverse directions and preferably also relative to torque created by the perforation flow.

Information obtained from static pressure transducers is particularly valuable because it follows from Newton's third law of motion that the force of a perforation jet flowing into the borehole is exactly counter-balanced by integrated pressures on a tool in the borehole and pressures on the casing.

The pressure forces on the casing cannot be measured but those on the tool can and those forces can be related by calibration to the flow from the perforation. The invention relies on the perforation flow either impacting on the tool or hydrodynamically having a strong interaction with the flow in the region of the tool. This interaction is strong only for those cases where the perforation flow velocity is greater than about five times the wellbore velocity. If only transverse forces are considered, it can be seen that an annular section of a tool may be constructed which is coupled to transducers, preferably strain gauge transducers, which enable the pressure forces on this section to be measured in two directions.

The annular section is preferably provided with a plurality of vanes, making it possible to measure also the torque on the annular section arising from the perforation flow.

Assume firstly that the perforation flow is directed radially inwards. The radial direction will be arbitrary relative to the sensing axes of the transducers but, assuming that these are orthogonal, the total force on the annular section can be computed from the root of the sum of the squares of the forces sensed by the individual transducers. If this force is normalised relative to the actual thrust of the perforation flow, normalised force falls off from a maximum value at zero wellbore flow velocity as a function of the ratio of wellbore flow velocity to perforation flow velocity, referred to as inverse velocity ratio. The normalised force is fairly neglegible by the time that the inverse velocity ratio has increased to about 0.2. That is to say, useful information can only be obtained so long as the perforation flow velocity is at least five times the wellbore flow velocity. This is for the typical case of a wellbore diameter of about 180 mm and a tool diameter of 43 mm, leaving an annular flow thickness between the casing and the tool of just under 70 mm. If this thickness is smaller, useful information is obtainable at higher inverse velocity ratios.

It is possible to plot an empirically obtained curve of normalized force versus velocity ratio or to tabulate such data in a computer file. The data can then be used as follows. A first measurement is made at the bottom perforation where wellbore flow velocity and hence the inverse velocity ratio are known to be zero. The data gives the normalized force at this ratio and the actual thrust equals measured total force divided by normalized force. Standard hydrodynamic equations will yield perforation flow and flow velocity from the known quantities, including actual thrust, tool and casing diameters and perforation diameter (typically 8.0 mm). This provides not only the desired quantity - (perforation flow for the first perforation) but enables the wellbore flow velocity at the second perforation to be readily calculated as the perforation flow velocity multiplied by the perforation area and divided by the net wellbore area.

At the level of the second perforation, the total force can be measured. This value and the known wellbore flow velocity will be consistent with only one value of perforation flow at the second perforation, since the perforation flow velocity has to be consistent with the empirical data mentioned above. The wellbore flow velocity at the third perforation is calculated as the sum of the velocity at the second perforation plus the incremental velocity arising from the flow in at the second perforation.

Proceeding up the borehole it is thus possible to determine the perforation flow and flow velocity at each perforation. The measurements will become less accurate the higher up the borehole one proceeds because of cumulative errors and the increasing inverse velocity ratio but useful information may be anticipated over a good proportion of the producing length of a typical well. It will be noted that the procedure is consistent with the preferred practice of taking measurements as a tool is pulled out of a borehole.

Interpretation of the perforation plus detection - scheme may be aided by the additional use of a full bore spinner to measure the integrated flow in the wellbore in a region away from the perforations. In such regions, there is usually no significant swirl in the flow and full bore spinner is known to give reasonable estimates of total flow.

The measurement of total force can take into account the torque created by the perforation flow using either computational techniques or interpretation of measurements with the aid of empirical data.

The tool will be influenced also by gravitational forces if there is any inclination and from inertial forces. A correction may be made for gravitational forces if inclination is known. The tool may itself be used to measure the inclination (before any perforations are made to start the flow). Inertial forces may be minimized by making the force-sensing part of the tool of approximately the same density as the species being won.

The invention comprehends the use of other transducers. For example a pattern of temperature transducers (such as a ring of transducers around the tool) will show the temperature distribution arising from the flow in of fluid at a temperature different from the fluid in the wellbore. Different distributions may be correlated with flow on the basis of empirically acquired data.

Impedance transducers, e.g. capacitance transducers, may be used first and foremost to ascertain the species flowing in through a perforation but again species distribution around the tool can provide flow information. Flow information thus derived or derived from temperature transducers will be less accurate than that derived from force transducers but may nevertheless be useful as it will indicate the relative productivities of perforations.

The invention will be described in more detail, by way of example, and with reference to the accompanying drawings, in which:

Fig 1 is a longitudinal cross-section of part of a tool embodying the invention, taken on the line I-I in Fig 2,

Fig 2 is a transverse cross-section of part of the tool embodying the invention, taken on the line II-II in Fig 1.

Fig 3 shows a typical plot of normalized force for such a tool, and

Fig 4 is a transverse cross-section of another embodiment.

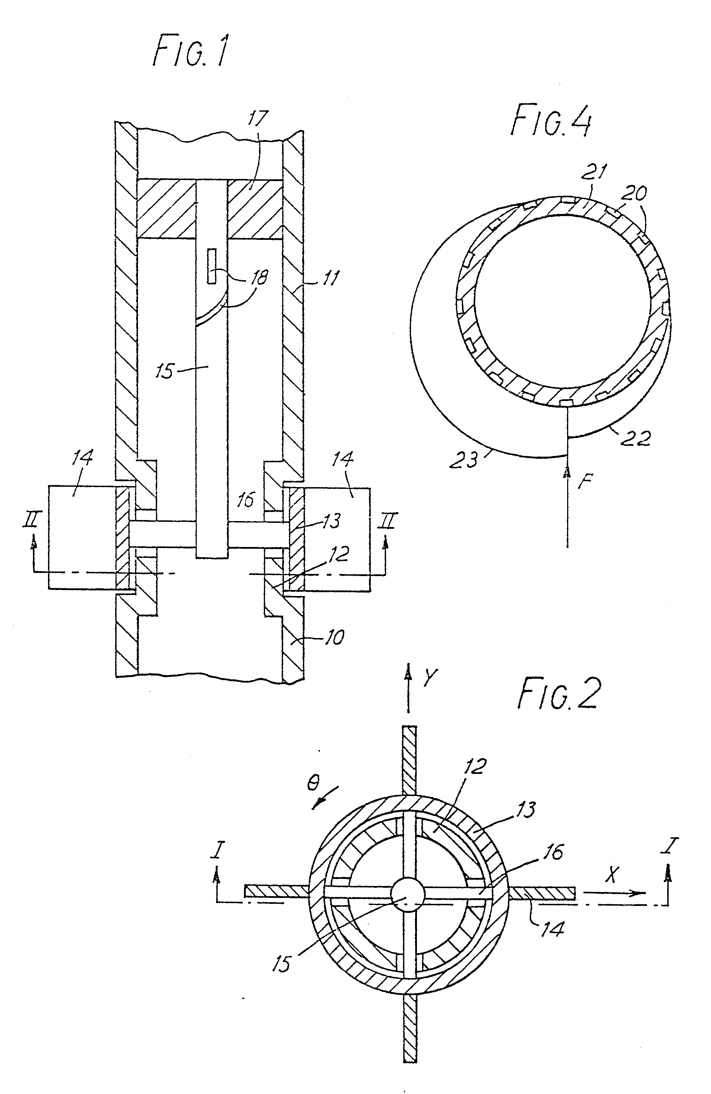

Figs 1 and 2 show lower 10 and upper 11 parts of a tool spaced apart but connected together by an inset ring 12, having an axial extent of 2-3 cm. Recessed into the annular channel around the ring 12 is a sensing collar 13 from which project four vanes 14 at 90° intervals. The collar has the same outside diameter at the tool parts 10 and 11. The sensing collar is connected to one end of an axial rod 15 inside the tool, by means of a spider 16 which passes freely through apertures in the inset ring 12. The other end of the rod 15 is firmly anchored inside the tool, being fixed in a block 17.

Any forces acting transversely on the collar 13 will tend to flex or twist the rod 15 which has a plurality of strain gauge transducers 18 bonded to it near the root of the rod. Only two representative transducers are shown in Fig 1. In practice, one pair will act differentially in a first bridge to sense flexure of the rod arising from a component of force in the direction of a radial X axis (Fig 2). A second pair will act differentially in a second bridge to sense flexure of the rod arising from a component of force in the direction of a radial Y axis. A third pair of helically arranged gauges will act differentially in a third bridge to sense twisting of the rod 15 arising from a torque in a direction $\theta$.

The mechanical arrangement is purely illustrative. Many other arrangements and dispositions of strain gauges may be devised to measure deflections in the directions X and Y and preferably also $\theta$, and hence corresponding components of force.

The vanes 14 are shown fixed to the collar 13 but they may be retractible vanes controlled by a positioning motor. According to one possibility the motor would rotate a disk with a spiral face thread engaging the vanes within the ring 12, so as to screw them in and out. According to another possibility the motor would pivot hinged vanes so as to fold them flat against the ring 13 and open them out from the folded position.

The X, Y and $\theta$ deflections translate directly into corresponding forces and torque from which the magnitude and direction of the total force vector acting on the collar 13 may be ascertained by computation or from empirically compiled tables.

Data from the transducers can be transmitted to the top of the borehole by wireline or using mud-pulsing telemetry. Alternatively, the data may be recorded downhole by storing thedata in anelectronic memory. The recorded or transmitted data may be raw or some processing may be carried out in the tool.

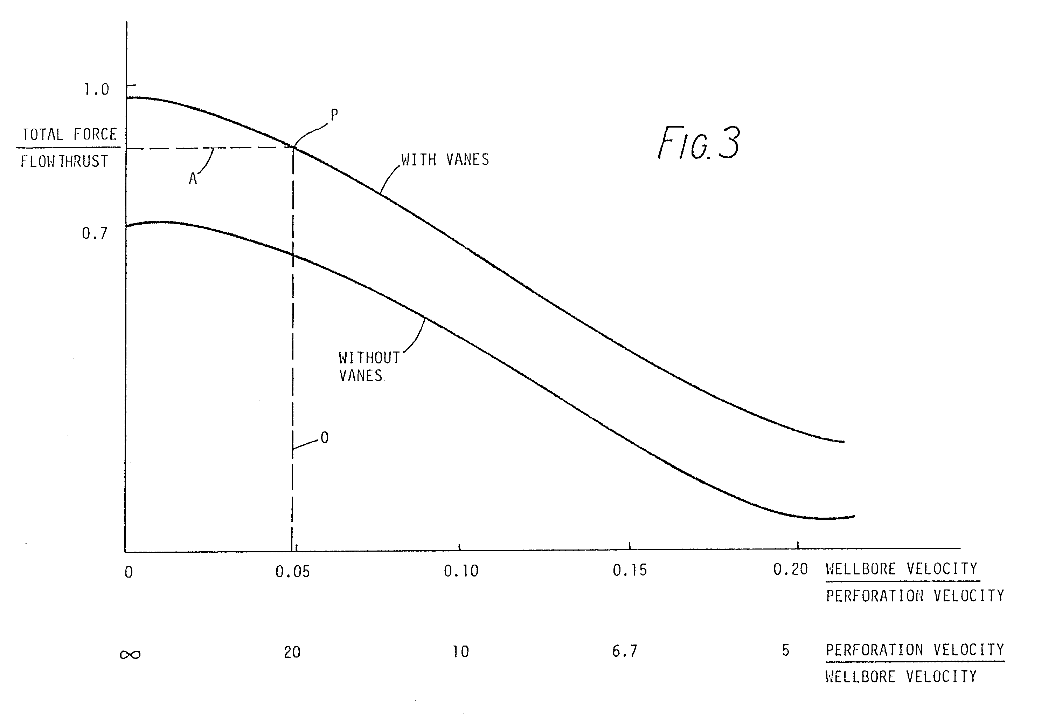

Fig 3 shows the form of curves plotted from experimental results. The abscissa is inverse velocity ratio, that is to say wellbore flow velocity divided by perforation flow velocity. Velocity ratio is also shown along the abscissa. The ordinate is normalized total force, that is to say the ratio of total experienced force to perforation flow thrust. Two curves are shown, one for a collar 13 with vanes and one for a collar which has no vanes and consequently cannot ascertain the torque contribution to total force.

If, at any perforation, total force and wellbore velocity are both known (as explained above) it will be possible to locate a point P at a unique position on the relevant curve because this is the only point at which an ordinate line O for a given perforation velocity will intersect the curve at the same point P as the abscissa line A corresponding to the flow thrust created by the perforation flow velocity.

If a computer has access to the data of Fig 3, e.g. a table of force/thrust ratios at intervals of inverse velocity ratio, it can readily be arranged to implement the necessary computations and ascertain the perforation flow velocity and mass flow rate.

Fig 4 is a cross-sectional view of another embodiment in which a ring of temperature transducers 20 are set in the wall 21 of a tool. If a perforation flow is impinging as shown by an arrow F, a small flow may give a temperature profile as plotted round one half of the tool in curve 22 where temperature differential is the $\underline{r}$ (radial) coordinate. A larger flow may give a profile or distribution 23.

In another embodiment, the transducers 20 are capacitance transducers which sense the dielectric constant of the adjacent fluid and hence indicate species. Such an embodiment is useful when the species varies from perforation to perforation. The signals from the transducers 20 may be transmitted up the borehole in any convenient way, e.g. time-division multiplexed into a single channel.

## Claims

1. Apparatus for monitoring perforation flow in a borehole, comprising a tool which can be lowered into a borehole and which incorporates a plurality of static transducers for sensing values of a physical variable around the tool, which values are influenced by perforation flow impinging on the tool.

2. Apparatus according to claim 1, wherein the transducers sense forces imposed on an annular section of the tool in two transverse directions, arising from the pressure of the perforation flow on that section.

3. Apparatus according to claim 2, wherein the annular section is provided with a plurality of vanes.

4. Apparatus according to claim 3, wherein the vanes are retractible.

5. Apparatus according to claim 3 or 4, comprising an additional transducer sensing torque on the annular section.

6. Apparatus according to any of claims 2 to 5, wherein the said section of the tool is a collar attached to the body of the tool by a resiliently deformable structure to which a plurality of strain gauges are applied.

7. Apparatus according to claim 1, wherein the transducers are a ring of temperature transducers around the tool

8. Apparatus according to claim 1, wherein the transducers are a ring of impedance transducers around the tool.

9. Apparatus according to claim 8, wherein the transducers are capacitance transducers.

10. A method of monitoring perforation flow in a borehole wherein total force on a section of a tool in the borehole is determined from a plurality of static transducers measuring forces in the directions of a plurality of axes, and an indication of perforation flow rate is obtained from the total force.

11. A method according to claim 10, wherein the transducers measure forces in two orthogonal radial directions.

12. A method according to claim 11, wherein the transducers additionally measure force in a torsional direction.

13. A method according to claim 10, 11 or 12, wherein the wellbore flow velocity at a perforation is determined and the perforation flow velocity is determined as that value thereof which is compatible with a ratio of wellbore flow velocity thereto and with a corresponding ratio of total force to perforation flow thrust arising from the determined perforation flow velocity.

14. Apparatus according to claim 13, wherein monitoring is effected from perforation to perforation starting from the lowest perforation whereat wellbore flow velocity is zero and wellbore flow velocity is determined from the total flow rates of the perforations below that whose flow rate is being determined.

15. A method of monitoring perforation flow in a borehole wherein the distribution of the value of a physical quantity around a tool in the borehole is determined from a ring of transducers around the tool.

16. A method according to claim 15, wherein the transducers measure temperature.

17. A method according to claim 15, wherein the transducers measure an impedance.

18. A method according to claim 17, wherein the transducers measure capacitance.

19. A method according to claim 17 or 18, wherein flow species is determined from the impedance measurements.

FIG.1

FIG.4

FIG.2

FIG. 3

WITH VANES

WITHOUT VANES.

$\dfrac{\text{TOTAL FORCE}}{\text{FLOW THRUST}}$

1.0

0.7

P

A

0

| | 0 | 0.05 | 0.10 | 0.15 | 0.20 | $\dfrac{\text{WELLBORE VELOCITY}}{\text{PERFORATION VELOCITY}}$ |

| ∞ | 20 | 10 | 6.7 | 5 | $\dfrac{\text{PERFORATION VELOCITY}}{\text{WELLBORE VELOCITY}}$ |

0 213 806